## Europäisches Patentamt
## European Patent Office
## Office européen des brevets

(11) Publication number: **0 115 221**
**B1**

(12) **EUROPEAN PATENT SPECIFICATION**

(45) Date of publication of patent specification: **30.03.88**

(51) Int. Cl.⁴: **G 01 M 3/04**, G 01 M 3/20

(21) Application number: **83308019.5**

(22) Date of filing: **29.12.83**

(54) **Detecting leaks.**

(30) Priority: **19.01.83 GB 8301407**

(43) Date of publication of application:
**08.08.84 Bulletin 84/32**

(45) Publication of the grant of the patent:
**30.03.88 Bulletin 88/13**

(84) Designated Contracting States:
**AT BE DE FR GB IT NL SE**

(56) References cited:
**EP-A-0 064 880**

**INSTRUMENTS & EXPERIMENTAL TECHNIQUES, vol. 19, no. 6, November/December 1976, pages 1734-1736, Plenum Publishing Corporation, New York, US; V.F.ROGAL et al.: "Jet probe of a halide leak detector"**

(73) Proprietor: **Gaydon Technology Limited Gaydon Proving Ground Banbury Road Lighthorne Warwickshire CV35 OBL (GB)**

(72) Inventor: **Marshall, Peter Edward George 37 Saxon Close Stratford-on-Avon Warwickshire (GB)**
Inventor: **Piper, Francis Raymond 5 Cedarwood Gardens Evesham Worcestershire (GB)**
Inventor: **Wilson, John Francis 36 St David's Road Thornbury Avon (GB)**

(74) Representative: **Waters, Jeffrey ARG Patent Department Cowley Body Plant Cowley Oxford OX4 5NL (GB)**

Courier Press, Leamington Spa, England.

# Description

This invention relates to leak detection and especially to leak detection involving the detection of a signal gas contained in an enclosure and at a pressure in excess of ambient, for the purpose of detecting imperfect seals and seams in the enclosure.

For the purpose of distinguishing between signal gas emerging from a leak and signal gas which may have built up in the area of the enclosure being tested from other leaks, it has been proposed to provide a circular opening surrounding a sampling probe through which circular opening barrier gas can be fed (USSR Inventor's Certificate No. 264744, United Kingdom Patent Application No. 1533013 and the Applicant's European patent application No. 0064880). Furthermore it has been proposed in Pribory i Tekhnika Eksperimenta, No. 6, pp. 128—130, November—December 1976, iV.F. Rogal et al, to provide a leak detector according to the pre-characterising portion of Claim 1. However, these proposals have not proved to be entirely satisfactory in that the gas curtain emerging from the circular opening would have weak points in it and would not be stable.

According to the invention there is provided a leak detector comprising a probe, an annular duct surrounding the probe, through which in use a barrier gas is fed, a first body member, a second body member interengaged with the first body member to define therebetween the annular duct, a first annular chamber formed in one of the first and second body members, the annular chamber being connected to the annular duct by a circumferential orifice such that the flow path of the barrier gas in use is turned through at least 90 degrees before entering the circumferential orifice characterised in that the circumferential orifice is a substantially continuous orifice defined between opposing end faces of the first and second body members and that the flow path of the gas in use is turned through an angle when exiting from the circumferential orifice into the annular duct.

The provision of the substantially continuous circumferential orifice and the turning of the flow path of the gas when exiting the circumferential orifice enable a continuous and uniform curtain of barrier gas to be achieved.

Advantageously, the angle that the flow path of the gas in use is turned through when exiting the circumferential orifice is at least 90 degrees.

Preferably, the flow path of the gas in use is turned through said angle when exiting the circumferential orifice by projection directly into a surface substantially normal to the flow path of the gas, which surface may be formed by a cylindrical wall forming part of one of the first or second body members.

This serves to induce turbulence in the barrier gas after it emerges from the circumferential orifice, and hence further improve annular distribution.

Advantageously, the flow path of the barrier gas in use is turned through at least 180 degrees before entering the circumferential orifice (14, 33).

Advantageously, the width of the circumferential orifice is less than 1.27 mm (50 thousandths of an inch), and preferably greater than 0.254 mm (10 thousandths of an inch). This assists in equalising the mass flow rate around the circumference of the annular duct where the barrier gas enters.

Such orifice dimensions are appropriate to a duct whose axial length is greater than 50.8 mm (2 inches), and preferably less than 152.4 mm (6 inches), to enable laminar flow to be established at the circular outlet opening. They are also appropriate to a circular opening whose width lies between 2 and 4 millimetres.

Preferably, there may be provided a second chamber coaxial with the first annular chamber, the second chamber being in communication with the first annular chamber by means of a plurality of outlet passages spaced around its circumference.

This enables all parts of the circumference of the first annular chamber to be fed with gas at constant pressure, even though the supply of barrier gas may be fed to the second chamber via a single port.

Advantageously, an inner wall of the annular duct is frusto-conical in shape and the adjacent outer wall in this region is substantially cylindrical so that the cross-sectional area of the annular duct in this region reduces in the direction of flow of the barrier gas.

This enables a shorter length of duct to be used while still obtaining the desired flow conditions.

Leak detectors and a method of detecting leaks in accordance with the invention will now be described by way of example with reference to the accompanying drawings, in which:

Figure 1 is an axial cross-section through a first leak detector, and

Figure 2 is an axial cross-section through a second leak detector.

Both leak detectors are intended to be used for the detection of leaks from an enclosure which contains signal gas at a pressure slightly in excess of ambient. The detector is moved over the surface of the enclosure with a range of heights (2—25 mm) from the surface.

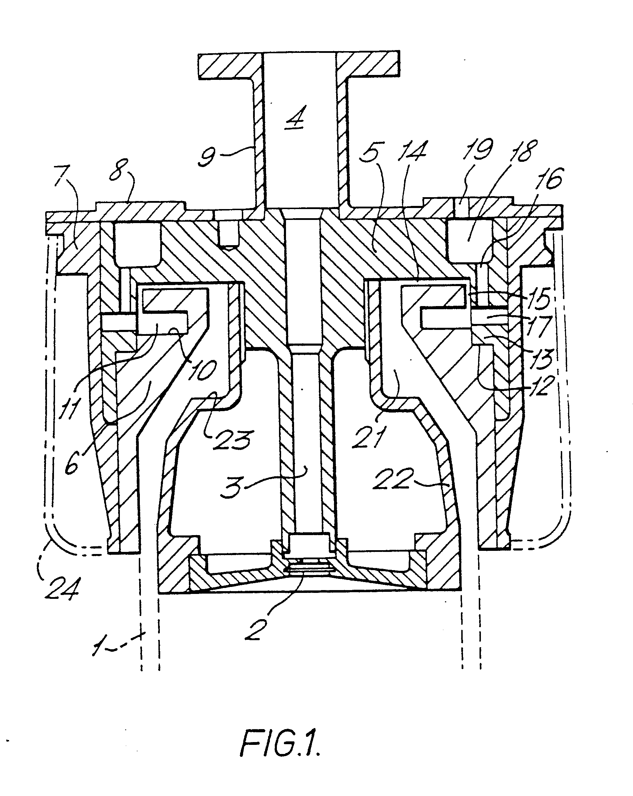

Referring to Figure 1, a curtain of barrier gas 1 surrounds a probe 2 in the end of the detector, which probe is a capillary tube, connected by a flexible hose, running through passages 3 and 4, to a detection system for the signal gas.

In both examples, the barrier gas is air and the signal gas is air to which a small amount of helium has been added, and in each case a mass spectrometer is used for detecting the helium. Other signal gases and barrier gases can of course be used.

The leak detector in Figure 1 comprises a body 5 with which a second body member in the form of an inner sleeve 6 and an outer sleeve 7 are interengaged. The top of the body 5 is closed by means of an end plate 8 which is formed integrally with a tube 9 which defines the passage 4.

The body 5 has a hollow insert 22 secured to it to form a first body member.

The inner sleeve 6 has a square sectioned groove 10 cut out from it, which extends all the way around the circumference of the inner sleeve, and defines a first annular chamber 11.

The distance between the top annular surface of the inner sleeve 6 and the adjacent annular surface of the body 5 is carefully controlled by means of abutting surfaces 12 on the sleeve and 13 on the body 5. The opposing annular surfaces defining a continuous circumferential orifice 14 which communicates via annular passage 15 with the first annular chamber 11.

Barrier gas is fed into the first annular chamber 11 by means of outlet passages in the form of right angled drillings 16, 17 in the body 5, four of which are evenly spaced around the circumference of the body 5 and communicate with a second chamber in the form of a square sectioned groove 18 in the top face of the body 5. Inlet 19 connects to a source of compressed gas.

The purpose of the circumferential orifice 14 and of the tortuous path which the barrier gas must take before it reaches the circumferential orifice 14 is to ensure that barrier gas emerging from the circumferential orifice 14 and entering annular duct 21 has an equal mass flow rate around the entire circumference of the annular duct 21.

It will be noted that in order to pass from the second annular chamber 18 to the circumferential orifice 14 the barrier gas has to pass through drilling 16, turn a right angle into drilling 17, a further right angle into passage 15 and a further right angle into the circumferential orifice 14. Finally, the gas stream emerging from the circumferential orifice 14 projects directly into a cylindrical wall normal to the gas flow causing the flow path of the gas to be turned through an angle of 90 degrees when exiting from the circumferential orifice 14.

The second annular chamber 18 acts like a manifold to distribute pressure equally around the drillings 16 so that barrier gas is fed at equal pressure along all points to the inlet ports of the first annular chamber 11.

After passing through the circumferential orifice 14, the barrier gas is turned through said angle and passes down duct 21 the outer wall of which is defined by the inner sleeve 6 and the inner wall of which is defined by means of the hollow insert 22 forming part of the first body member. The duct 21 is symmetrical about the axis of the detector, that is, the duct can be generated by any axial section of the duct when swept in a circle about the axis of the detector. The outer wall of the duct 21 has a frusto-conical portion with a semi-angle of approximately 30 degrees and the inner wall of the duct in this region has an annular shoulder 23. Lower down, the outer wall of the duct is cylindrical and over this region the inner wall is frusto-conical with a semi-angle of around 5 degrees to 10 degrees. The surfaces of the duct are smooth.

The configuration of the duct is such as to produce substantially laminar flow from the circular opening 20 even though the flow after the circumferential orifice 14 is turbulent. Laminar flow means that at any point around the circumference of the opening 20, the velocity profile across the width of the curtain is always positive and reduces gradually from the centre of the curtain to the sides.

Because equal mass flow rate enters the duct around its circumference, the velocity profile is also substantially the same around the entire circumference of the curtain. Consequently the curtain has no weak points or local disturbances in it and is of equal strength around its circumference.

The configuration is also such that the stagnation pressure is equal around the circumference of the curtain. The stagnation pressure is the pressure that results from the velocity of the gas. If a pressure sensor was inserted into the curtain facing towards the opening 20, and another pressure sensor was inserted close by but at right angles to the velocity of the curtain, the reading of the first sensor would be slightly greater than that of the second, due to the velocity of the gas. That difference is the stagnation pressure. The reading of the second sensor is of course atmospheric pressure. The leak detector is such that the stagnation pressure is low but equal around all points on the circumference of the curtain.

It has been found that the shoulder 23, which in combination with the frusto-conical portion of the outer wall forms a region of locally increased cross-sectional area of the duct, is important in producing the desired laminar flow.

The tapering of the duct produced by the adjacent cylindrical outer and frusto-conical inner walls, results in a reduction in the cross-sectional area of the duct in the direction of flow of the barrier gas and has the effect of allowing a shorter duct to be used than would otherwise be the case.

For the embodiment illustrated in Figure 1, typical dimensions are as follows: diameter of curtain, 101.6 mm (4 inches); axial length of duct, 101.6 mm (4 inches); width of circumferential orifice 14, between 0.254 mm—1.27 mm (10 and 50 thousandths of an inch); width of curtain, between 2 and 4 mm; semi-angle of frusto-conical portion of annular duct, 15 to 45 degrees. The operating height of the detector from the surface is 2—25 mm.

The compressed air supply may be in the region of 34.5—138 $KN/m^2$ (5 to 20 pounds per square inch). Lower pressures could be used if it is conducted along larger diameter tubes. The probe 2 and flexible hose assembly is evacuated by an auxiliary pump, which ensures the rapid transfer of the signal gas when present into the analyser for detection by the mass spectrometer. The mass spectrometer pressure is in the $10^{-2}$ to $10^{-3}$ $N/m^2$ range ($10^{-4}$ to $10^{-5}$ millibar). It is

possible that results could be achieved without any suction along the capillary tube because the pressure within the curtain will be slightly in excess of atmospheric due to the effect of the barrier gas defining a closed volume with the surface to be tested but in this case the response will be considerably slower.

A flexible rubber sleeve 24 closed at each end may be secured to the outside of the outer sleeve 7 and connected up to a suitable detector for detecting low pressure pulses: alternatively strain gauges could be used. The purpose in either case is to provide warning if the detector strikes an object.

The detector may be used for detecting leaks from a vehicle such as where seals have been incorrectly applied or where seams have been badly welded or sealed and is very suitable for this purpose because of the stability of the curtain. It will be apparent that, in tracking for example the door seal on a vehicle the surface in the region of the door seal will be anything but flat, and a stable curtain is a practical necessity for the device to work at all. It has been found that the illustrated detector need not be used at right angles to the body to be tested, but can be used at any inclination that the curtain is stable when the detector is moved, and that the curtain even remains intact if the body has a local depression, e.g. a blind gutter on a vehicle, beneath the curtain. The leak detector may be mounted as the head on a robot arm programmed to track around certain paths around the vehicle along which leaks may be detected.

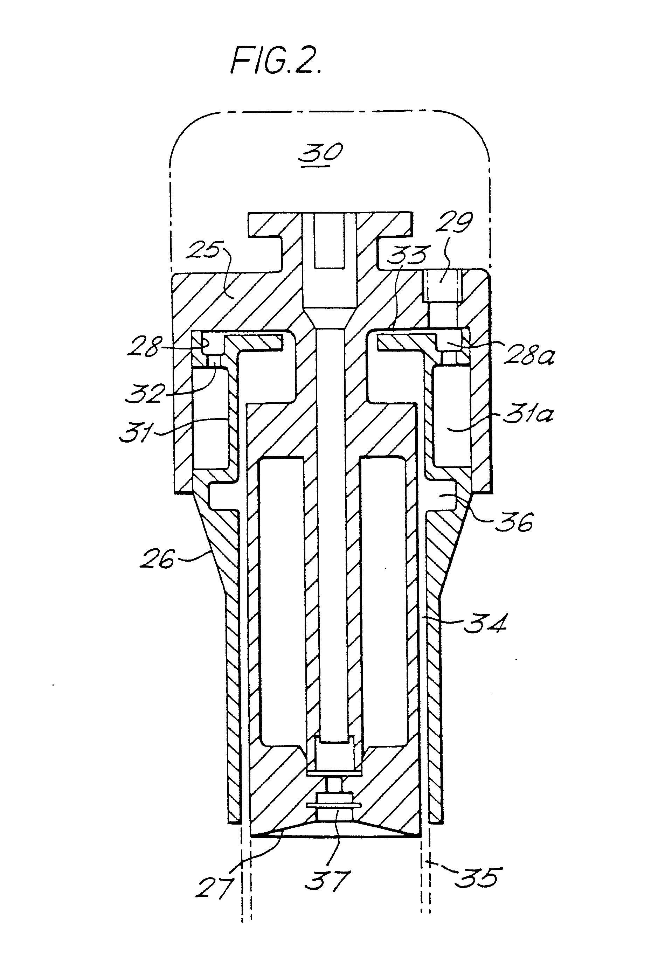

Referring to Figure 2, the second leak detector comprises a body 25 forming a first body member to which both an inner sleeve 26 and an insert 27 are secured. The sleeve 26 forms a second body member and has a groove 28 in its upper surface which defines a first annular chamber 28a. This is fed with compressed gas via several drillings 29 equally spaced around the circumference of the device. The drillings 29 form outlet passages which are fed with compressed gas from a large chamber 30 to which a supply of compressed gas is fed (not shown).

A second groove 31 formed around the side of the sleeve 26 communicates at several points 32 equally spaced around the circumference of the groove with the annular chamber 28a. The further annular chamber 31a formed by the groove is of larger volume than the first annular chamber 28a and acts as an accumulator.

The first annular chamber 28a leads to a continuous circumferential orifice 33 defined between opposing annular surfaces of the first and second body members 25, 26. The combination of the large chamber 31, the several drillings 29, and the accumulator 31a serve to ensure that barrier gas emerging from the circumferential orifice 33 has an equal mass flow rate at all points around the circumference of the circumferential orifice exit.

Equal mass flow rate into annular duct 34 at all points on its circumference therefore takes place.

The flow impinges directly onto a cylindrical surface 25a of the body 25 which causes the flow path of the gas to be turned through an angle of 90 degrees when exiting the circumferential orifice 33 and produces turbulence in the flow. The flow is therefore highly turbulent after the circumferential orifice 33, but annular duct 34, which is symmetrical about the axis of the duct, produces substantially laminar flow out of opening 35.

As with the first embodiment, the flow is substantially laminar, with an equal stagnation pressure and the same velocity profile, around the circumference of the opening 35 to produce a stable curtain with no weak points.

It has been found that an increased diameter portion 36 in the outer wall of the annular duct 34 assists in the production of laminar flow.

As with the first embodiment, a probe 37 in the form of a capillary tube which is connected to a mass spectrometer may be used to sense leaks, and the barrier gas may be air.

Typical dimensions are: axial length of duct 34, 101.6 mm (4 inches); diameter of curtain, 25.4 mm (1 inch); width of opening 35, 2 to 4 mm; and width of orifice, 0.254 mm—1.27 mm (10 to 50 thousandths of an inch). The detector can be used from 2 to 15 mm from a surface to be tested for leaks.

**Claims**

1. A leak detector comprising a probe (2, 37), an annular duct (21, 34) surrounding the probe (2, 37), through which in use a barrier gas is fed, a first body member (5, 22 or 25), a second body member (6, 26) interengaged with the first body member (5, 22 or 25) to define therebetween the annular duct (21, 34), a first annular chamber (11, 28a) formed in one of the first and second body members (5, 22 and 6 or 25 and 26), the annular chamber (11, 28a) being connected to the annular duct (21, 34) by a circumferential orifice (14, 33) such that the flow path of the barrier gas in use is turned through at least 90 degrees before entering the circumferential orifice (14, 33) characterised in that the circumferential orifice (14, 33) is a substantially continuous orifice defined between opposing surfaces of the first and second body members (5, 22 and 6 or 25 and 26) and that the flow path of the gas in use is turned through an angle when exiting from the circumferential orifice (14, 33) into the annular duct (21, 24).

2. A leak detector as claimed in Claim 1 characterised in that the angle that the flow path of the gas in use is turned through when exiting the circumferential orifice (14, 33) is at least 90 degrees.

3. A leak detector as claimed in Claim 1 or in Claim 2 characterised in that the flow path of the gas in use is turned through said angle when exiting the circumferential orifice (14, 33) by projection directly into a surface substantially normal to the flow path of the gas.

4. A leak detector as claimed in Claim 3 characterised in that the surface is formed by a cylindrical wall forming part of one of the first or second body members (5, 22 or 6, 25 or 26).

5. A leak detector as claimed in any preceding claim characterised in that the flow path of the barrier gas in use is turned through at least 180 degrees before entering the circumferential orifice (14, 33).

6. A leak detector as claimed in any preceding claim characterised in that the width of the circumferential orifice (14, 33) is less than 1.27 mm.

7. A leak detector as claimed in any preceding claim characterised in that the width of the circumferential orifice (14, 33) is greater than 0.254 mm.

8. A leak detector as claimed in any previous claim characterised in that there is a second chamber (18, 30) having a plurality of outlet passages (16, 17 or 29) spaced around its circumference and that the second chamber (18, 30) is coaxial with and in communication with the first annular chamber (11, 28a) by means of the outlet passages (16, 17 or 29).

9. A leak detector as claimed in any previous claim characterised in that the annular duct (21, 34) has a portion of increased cross-sectional area at a position along its length.

10. A leak detector as claimed in any previous claim characterised in that an outer wall of the annular duct (21) is defined by a wall of the second body member (6) and that at least part of said outer wall is frusto-conical having a semi-angle lying within the range 15 to 45 degrees.

11. A leak detector as claimed in claim 10 when dependent upon claim 9 characterised in that an inner wall of the annular duct (21) is defined by a wall of the first body member (5, 22) and that a part of said inner wall has an annular shoulder (23) formed in it adjacent to the area where the outer wall is frusto-conical thereby forming said portion of increased cross-sectional area.

12. A leak detector as claimed in claim 11 characterised in that the inner wall of the annular duct (21) adjacent to said annular shoulder is frusto-conical and that the adjacent outer wall in this region is substantially cylindrical so that the cross-sectional area of the annular duct (21) in this region reduces in the direction of flow of the barrier gas.

13. A leak detector as claimed in any one of claims 1 to 12, characterised in that the detector includes a resilient sleeve surrounding it which is closed at each end, and means to sense pressure fluctuations in the sleeve if it strikes an object.

## Patentansprüche

1. Leckdetektor mit einer Sonde (2, 37), einem die Sonde (2, 37) umgebenden ringförmigen Kanal (21, 34), durch den im Einsatz, ein Sperrgas geleitet wird, einem ersten Körperelement (5, 22 oder 25), einem zweiten Körperelement (6, 26), das mit dem ersten Körperelement (5, 22 oder 25) in derartigem Eingriff steht, daß der ringförmige Kanal (21, 34) dazwischen definiert ist, und mit einer ersten ringförmigen Kammer (11, 28a), die in dem ersten oder dem zweiten Körperelement (5, 22 und 6 oder 25 und 26) ausgebildet ist, wobei die ringförmige Kammer (11, 28a) mit dem ringförmigen Kanal (21, 34) durch eine Umfangsöffnung (14, 33) derart verbunden ist, daß der Strömungsweg des Sperrgases im Einsatz in einem Ausmaß von wenigstens 90 Grad umgelenkt wird, bevor es in die Umfangsöffnung (14, 33) eintritt, dadurch gekennzeichnet, daß es sich bei der Umfangsöffnung (14, 33) um eine im wesentlichen kontinuierliche Öffnung handelt, die zwischen einander gegenüberliegenden Flächen des ersten und des zweiten Körperelements (5, 22 und 6 oder 25 und 26) definiert ist, und daß der Strömungsweg des Gases im Einsatz beim Austreten aus der Umfangsöffnung (14, 33) in den ringförmigen Kanal (21, 34) hinein in einem Winkel umgelenkt wird.

2. Leckdetektor nach Anspruch 1, dadurch gekennzeichnet, daß der Winkel, in dem der Strömungsweg des Gases im Einsatz beim Verlassen der Umfangsöffnung (14, 33) umgelenkt wird, wenigstens 90 Grad beträgt.

3. Leckdetektor nach Anspruch 1 oder Anspruch 2, dadurch gekennzeichnet, daß der Strömungsweg des Gases im Einsatz dadurch beim Verlassen der Umfangsöffnung (14, 33) in dem genannten Winkel umgelenkt wird, daß er direkt in eine im wesentlichen senkrecht zu dem Strömungsweg des Gases verlaufende Fläche trifft.

4. Leckdetektor nach Anspruch 3, dadurch gekennzeichnet, daß die Fläche durch eine zylindrische Wand gebildet ist, die Bestandteil des ersten oder des zweiten Körperelements (5, 22 oder 6, 25 oder 26) bildet.

5. Leckdetektor nach einem der vorausgehenden Ansprüche, dadurch gekennzeichnet, daß der Strömungsweg des Sperrgases im Einsatz in einem Ausmaß von wenigstens 180 Grad umgelenkt wird, bevor es in die Umfangsöffnung (14, 33) eintritt.

6. Leckdetektor nach einem der vorausgehenden Ansprüche, dadurch gekennzeichnet, daß die Weite der Umfangsöffnung (14, 33) kleiner als 1,27 mm ist.

7. Leckdetektor nach einem der vorausgehenden Ansprüche, dadurch gekennzeichnet, daß die Weite der Umfangsöffnung (14, 33) größer als 0,254 mm ist.

8. Leckdetektor nach einem der vorausgehenden Ansprüche, dadurch gekennzeichnet, daß eine zweite Kammer (18, 30) vorgesehen ist, die eine Mehrzahl von um deren Umfang voneinander beabstandeten Auslaßpassagen (16, 17 oder 29) aufweist, und daß die zweite Kammer (18, 30) mit der ersten ringförmigen Kammer (11, 28a) koaxial ist und mittels der Auslaßpassagen (16, 17 oder 29) mit dieser in Verbindung steht.

9. Leckdetektor nach einem der vorausgehenden Ansprüche, dadurch gekennzeichnet, daß der ringförmige Kanal (21, 34) einen Bereich vergrößerter Querschnittsfläche an einer Stelle entlang seiner Länge aufweist.

10. Leckdetektor nach einem der vorausgehenden Ansprüche, dadurch gekennzeichnet, daß eine Außenwand des ringförmigen Kanals (21) durch eine Wand des zweiten Körperelements (6) definiert ist, und daß wenigstens ein Teil der genannten Außenwand kegelstumpfförmig ist und einen im Bereich von 15 bis 45 Grad liegenden Halbwinkel aufweist.

11. Leckdetektor nach Anspruch 10 bei dessen Abhängigkeit von Anspruch 9, dadurch gekennzeichnet, daß eine Innenwand des ringförmigen Kanals (21) durch eine Wand des ersten Körperelements (5, 22) definiert ist, und daß in einem Teil der genannten Innenwand benachbart dem Bereich, wo die Außenwand kegelstumfförmig ist, eine ringförmige Schulter (23) ausgebildet ist, wodurch der genannte Bereich vergrößerter Querschnittsfläche gebildet ist.

12. Leckdetektor nach Anspruch 11, dadurch gekennzeichnet, daß die Innenwand des ringförmigen Kanals (21) angrenzend an die genannte ringförmige Schulter kegelstumpfförmig ausgebildet ist, und daß die benachbarte Außenwand in dieser Region im wesentlichen zylindrisch ausgebildet ist, so daß die Querschnittsfläche des ringförmigen Kanals in dieser Region in Strömungsrichtung des Sperrgases abnimmt.

13. Leckdetektor nach einem der Ansprüche 1 bis 12, dadurch gekennzeichnet, daß der Detektor eine ihn umgebende elastische Hülse, die an jedem Ende geschlossen ist, sowie eine Einrichtung zum Erfassen von Druckschwankungen in der Hülse aufweist, falls diese gegen einen Gegenstand stößt.

### Revendications

1. Détecteur de fuites comprenant un capteur (2, 37) un conduit annulaire (21, 34) entourant ce capteur (2, 37) et à travers lequel un gaz d'arrêt est amené en cours d'utilisation, un premier élément de corps (5, 22 ou 25), un second élément de corps (6, 26) coopérant mutuellement avec ce premier élément de corps (5, 22 ou 25) de façon à délimiter entre eux le conduit annulaire (21, 34), une première chambre annulaire (11, 28a) ménagée dans l'un des premier et second éléments de corps (5, 22 et 6 ou 25 et 26), cette chambre annulaire (11, 28a) étant reliée au conduit annulaire (21, 34) par un espace en couronne (14, 33) qui est tel que le trajet d'écoulement du gaz d'arrêt en cours d'utilisation tourne d'au moins 90 degrés avant de pénétrer dans l'espace en couronne (14, 33), caractérisé en ce que l'espace en couronne (14, 33) est un espace sensiblement continu délimité par des surfaces, en regard, des premier et second éléments de corps (5, 22 et 6 ou 25 et 26) et en ce que le trajet d'écoulement du gaz en cours d'utilisation tourne d'un certain angle lorsqu'il sort de l'espace en couronne (14, 33) vers le conduit annulaire (21, 24).

2. Détecteur de fuites tel que revendiqué dans la revendication 1, caractérisé en ce que l'angle dont le trajet d'écoulement du gaz en cours d'utilisation tourne lorsqu'il sort de l'espace en couronne (14, 33) est d'au moins 90 degrés.

3. Détecteur de fuites tel que revendiqué dans la revendication 1 ou la revendication 2, caractérisé en ce que le trajet d'écoulement du gaz en cours d'utilisation tourne dudit angle lorsqu'il sort de l'espace en couronne (14, 33) en étant projeté directement sur une surface sensiblement normale au trajet d'écoulement du gaz.

4. Détecteur de fuites tel que revendiqué dans la revendication 3, caractérisé en ce que la surface est formée par une paroi cylindrique faisant partie de l'un des premier ou second éléments de corps (5, 22 ou 6, 25 ou 26).

5. Détecteur de fuites tel que revendiqué dans une revendication précédente quelconque, caractérisé en ce que le trajet d'écoulement du gaz d'arrêt en cours d'utilisation tourne d'au moins 180 degrés avant d'entrer dans l'espace en couronne (14, 33).

6. Détecteur de fuites tel que revendiqué dans une revendication précédente quelconque, caractérisé en ce que la largeur de l'espace en couronne (14, 33) est inférieure à 1,27 mm.

7. Détecteur de fuites tel que revendiqué dans une revendication précédente quelconque, caractérisé en ce que la largeur de l'espace en couronne (14, 33) est supérieure à 0,254 mm.

8. Détecteur de fuites tel que revendiqué dans une revendication précédente quelconque, caractérisé en ce qu'il existe une seconde chambre (18, 30) présentant plusieurs passages de sortie (16, 17 ou 29) répartis tout autour de sa périphérie et en ce que cette seconde chambre (18, 30) est coaxiale à la première chambre annulaire (11, 28a) et communique avec celle-ci au moyen des passages de sortie (16, 17 ou 29).

9. Détecteur de fuites tel que revendiqué dans une revendication précédente quelconque, caractérisé en ce que le conduit annulaire (21, 34) présente une partie d'aire en section transversale plus grande en un emplacement donné sur sa longueur.

10. Détecteur de fuites tel que revendiqué dans une revendication précédente quelconque, caractérisé en ce qu'une paroi extérieure du conduit annulaire (21) est constituée par une paroi du second élément de corps (6) et en ce qu'au moins une partie de cette paroi extérieure est tronconique avec un demi-angle au sommet se trouvant dans la gamme de 15 à 45 degrés.

11. Détecteur de fuites tel que revendiqué dans la revendication 10 lorsqu'elle dépend de la revendication 9, caractérisé en ce qu'une paroi intérieure du conduit annulaire (21) est constituée par une paroi du premier élément de corps (5, 22) et en ce qu'une partie de cette paroi intérieure présente un épaulement annulaire (23) ménage sur elle au voisinage de la zone où la paroi extérieure est tronconique, en formant ainsi ladite partie d'aire plus grande en section transversale.

12. Détecteur de fuites tel que revendiqué dans la revendication 11, caractérisé en ce que la paroi intérieure du conduit annulaire (21) est tronconique au voisinage dudit épaulement annulaire et en ce que la paroi extérieure adjacente située dans cette région est sensiblement cylindrique, si bien que l'aire de la section transversale du conduit annulaire (21) se réduit dans cette région suivant la direction d'écoulement du gaz d'arrêt.

13. Détecteur de fuites tel que revendiqué dans l'une quelconque des revendications 1 à 12, caractérisée en ce que ce détecteur comprend un fourreau élastique l'entourant et qui est fermé à chaque extrémité, et des moyens pour détecter des fluctuations de pression dans ce fourreau s'il heurte un objet.

FIG.1.

## FIG.2.